# FASCICULE DE BREVET EUROPEEN

(11) **EP 1 832 460 B1**
(45) Date de publication et mention de la délivrance du brevet: **16.12.2009**
(21) Numéro de dépôt: 06300214.1
(22) Date de dépôt: 08.03.2006
(51) Int. Cl.: B60K 6/445, B60K 6/365, B60W 20/00, F16H 3/72

(54) **Dispositif de transmission de puissance et procédé mettant en oeuvre ce dispositif**
Verzweigtes schaltbares elektromechanisches Getriebe und dessen Steuerung
Power-split shiftable electromechanical transmission and control method thereof.

(43) Date de publication de la demande: 12.09.2007
(73) Titulaire: Peugeot Citroën Automobiles SA, 78140 Vélizy-Villacoublay (FR)
(72) Inventeur: Besnard, Sébastien, 92330 Sceaux (FR); Laeuffer, Jacques, 75007 Paris (FR); Leneveu, Géraud, 92500 Rueil-Malmaison (FR)

(56) Documents cités:
- EP-A- 1 097 830
- WO-A-2006/032819
- US-A1- 2003 100 395
- US-A1- 2006 025 264
- PATENT ABSTRACTS OF JAPAN vol. 2003, no. 12, 5 décembre 2003 (2003-12-05) -& JP 2005 297786 A (TOYOTA MOTOR CORP), 27 octobre 2005 (2005-10-27)
- PATENT ABSTRACTS OF JAPAN vol. 2003, no. 12, 5 décembre 2003 (2003-12-05) -& JP 2006 029431 A (NISSAN MOTOR CO LTD), 2 février 2006 (2006-02-02)

## Description

La présente invention concerne un dispositif de transmission de puissance entre un arbre d'un moteur thermique et un arbre de roues d'un véhicule. L'invention a pour but de supprimer des ruptures ou effacements de couple à la roue lors de changements de rapports de transmission. La présente invention trouve une application particulièrement avantageuse dans le domaine des véhicules automobiles, mais elle pourrait aussi être mise en oeuvre dans des trains, des bateaux ou des motocyclettes.

On connaît des dispositifs de transmission de puissance entre un arbre d'un moteur et un arbre de roues utilisés dans des véhicules hybrides. De tels dispositifs sont décrits dans la demande FR-A-2832357. Ces dispositifs de transmission comportent généralement un moteur thermique, et une paire de machines électriques. L'arbre du moteur, l'arbre des roues et des arbres des machines sont reliés entre eux par l'intermédiaire d'un ensemble mécanique. Cet ensemble mécanique est en général formé d'un ou plusieurs trains épicycloïdaux. Les deux machines sont reliées entre elles par l'intermédiaire d'un dispositif de liaison comportant notamment un bus électrique. Ces machines se comportent en moteur ou en générateur en fonction des énergies mécaniques et électriques qu'elles reçoivent respectivement sur leur arbre et sur leurs bornes.

Une puissance fournie par le moteur thermique peut être soit transmise directement à l'arbre de roues par l'intermédiaire de l'ensemble mécanique, soit dérivée dans une chaîne électrique comportant les moteurs et le dispositif de liaison. La puissance dérivée dans la chaîne électrique est transmise à l'arbre des roues de manière à ajuster le couple appliqué sur cet arbre, tout en adaptant le couple et le régime du moteur thermique à un point de fonctionnement où la consommation de ce moteur est minimale.

Dans une première configuration du dispositif de transmission, aucun système de stockage n'est relié au bus électrique. Dans cette configuration, la puissance dans la chaîne électrique est quasiment nulle, aux pertes des machines électriques près. La puissance consommée par une des machines est alors consommée automatiquement par l'autre machine. En conséquence, lorsqu'une des machines se comporte en moteur, l'autre machine se comporte en générateur.

Dans une deuxième configuration du dispositif de transmission, un système de stockage est relié au bus électrique. Ce système de stockage peut prendre la forme d'une batterie, d'un super condensateur ou d'une machine à inertie. Une partie de la puissance dérivée peut alors être récupérée et stockée dans ce système de stockage. La batterie de stockage autorise des degrés de fonctionnement supplémentaires du système. A cet effet, les deux machines peuvent fonctionner simultanément en moteur dans un mode d'accélération. En outre, dans un mode de récupération d'énergie particulier, les deux machines fonctionnent simultanément en générateur, de manière à stocker une grande quantité d'énergie.

La présente invention consiste en un perfectionnement du dispositif de transmission décrit dans la demande FR-A-2832357qui ne comporte pas de deuxième dispositif de commutation.

On connait également du document JP 2005 297786 un dispositif de transmission de puissance d'architecture similaire à celle de la demande FR-A-2832357, mais qui ne comporte pas de liaison entre le planétaire du premier train avec la couronne du second train.

Dans le dispositif de transmission décrit dans cette demande, l'arbre d'une des machines peut être couplé à l'arbre des roues du véhicule. Plus précisément, dans ce dispositif de transmission, un arbre d'une des machines peut être relié soit à l'arbre des roues dans un premier mode de fonctionnement, soit à un élément de l'ensemble mécanique dans un deuxième mode de fonctionnement. Chaque mode de fonctionnement correspond à une plage de rapports de transmission. Le premier mode correspond à des rapports de transmission courts, tandis que le deuxième mode correspond à des rapports de transmission longs.

Le fait de disposer de deux modes de fonctionnement différents en fonction de la situation de vie du véhicule permet de minimiser le dimensionnement en couple des deux machines électriques et de réduire les pertes dissipées dans ces deux machines. Les machines électriques utilisées sont ainsi de taille plus petite que dans un dispositif de transmission ne comportant qu'un seul mode de fonctionnement.

Dans l'invention, pour réduire encore la taille des machines électriques et des onduleurs correspondant, et pour réaliser également des économies d'énergie, un nouveau mode de fonctionnement est introduit. Plus précisément, dans l'invention, outre le fait de pouvoir coupler l'arbre d'une des machines avec l'arbre des roues, il est possible de coupler l'arbre de l'autre machine avec l'arbre du moteur thermique.

Ainsi, dans l'invention, dans un premier mode de fonctionnement, l'arbre d'une des machines est relié à un élément d'un des trains épicycloïdaux tandis que l'arbre de l'autre machine est relié à l'arbre de roues. Dans un deuxième mode de fonctionnement, les arbres des deux machines sont reliés chacun à un élément d'un des trains épicycloïdaux. Dans un troisième mode de fonctionnement, un arbre d'une des machines est relié à l'arbre du moteur, tandis que l'arbre de l'autre machine est relié à un élément d'un des trains épicycloïdaux.

Dans une réalisation particulière, l'ensemble mécanique est formé de deux trains épicycloïdaux reliés entre eux par leur porte-satellites. L'arbre d'une des machines est relié soit à l'arbre du moteur thermique, soit à une couronne d'un des trains épicycloïdaux. L'arbre de l'autre machine est relié soit à l'arbre des roues du véhicule, soit à un planétaire de l'autre train épicycloïdal.

Dans l'invention, on explore ainsi au mieux la dynamique de puissance du moteur thermique. Cette exploration de la dynamique de couple et régime permet d'économiser un maximum d'énergie tout en faisant évoluer le couple appliqué sur l'arbre de roues de la manière la plus continue possible.

De préférence, lors d'un changement de mode à un autre, la puissance transmise par la chaîne électrique est nulle afin de gérer plus facilement la continuité du couple à la roue .

L'invention concerne donc un dispositif de transmission de puissance entre un arbre d'un moteur thermique et un arbre de roues, conforme à l'objet de la revendication 1.

L'invention sera mieux comprise à la lecture de la description qui suit et à l'examen des figures qui l'accompagnent. Ces figures sont données à titre illustratif mais nullement limitatif de l'invention. Ces figures montrent :
- Figure 1 : une représentation schématique d'un dispositif de transmission selon l'invention ;
- Figure 2a : une représentation schématique d'un dispositif de transmission selon l'invention comportant un ensemble mécanique formé de deux trains épicycloïdaux ;
- Figure 2b : une illustration du premier mode de fonctionnement du dispositif de transmission de la figure 2a ;
- Figure 2c : une illustration du deuxième mode de fonctionnement du dispositif de transmission de la figure 2a ;
- Figure 2d : une illustration du troisième mode de fonctionnement du dispositif de transmission de la figure 2a ;
- Figure 3 : une représentation graphique de la vitesse de rotation d'un arbre du moteur en fonction de la vitesse du véhicule ;
- Figure 4a-4c : une représentation schématique d'un déplacement d'un dispositif de commutation lors d'un changement de mode à un autre ;

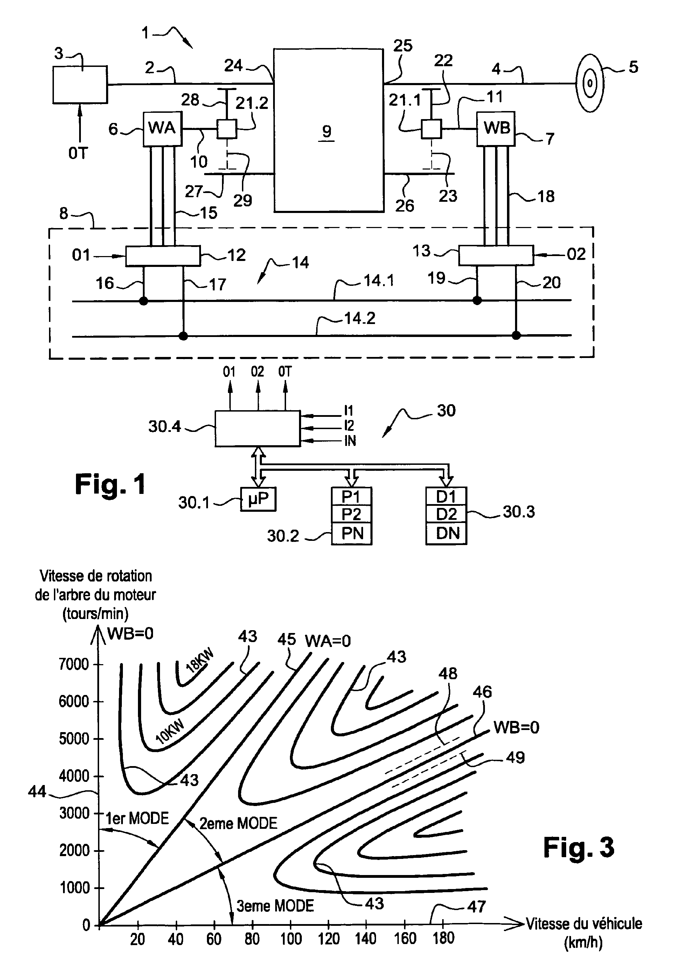

La figure 1 montre une représentation schématique d'un dispositif 1 de transmission de puissance selon l'invention. Ce dispositif 1 assure une transmission de puissance entre un arbre 2 d'un moteur 3 thermique et un arbre 4 de roues 5.

Ce dispositif 1 de transmission comporte une première machine 6 électrique et une deuxième machine 7 électrique reliées entre elles par l'intermédiaire d'un dispositif 8 de liaison électrique.

Un ensemble mécanique 9 relie entre eux l'arbre 4 de roues 5, l'arbre 2 du moteur 3, un arbre 10 de la première machine 6 et un arbre 11 de la deuxième machine 7. Cet ensemble mécanique 9 comporte au moins deux trains épicycloïdaux. Ces deux trains épicycloïdaux comportent chacun trois éléments qui engrènent mutuellement. Ces trois éléments sont une couronne, un porte satellites et un planétaire. Ces deux trains épicycloïdaux sont reliés entre eux de manière à présenter quatre degrés de liberté, un pour chaque arbre.

En variante, les trains épicycloïdaux comportent plus de trois éléments. Par exemple, chaque train pourrait comporter une couronne à dentures extérieures qui engrènerait avec un quatrième élément. Dans un autre exemple, chaque train comporterait plusieurs portes-satellites. Par ailleurs, dans certaines réalisations, les trains épicycloïdaux sont reliés entre eux par l'intermédiaire d'arbres d'engrenage et de pignons. Dans ces réalisations, les pignons engrènent avec des éléments des trains épicycloïdaux.

L'arbre 2 du moteur 3 est relié à un premier élément 24 d'un des trains de l'ensemble 9. L'arbre 4 des roues 5 est relié à un deuxième élément 25 d'un des trains de l'ensemble 9. Comme expliqué ci-après, l'arbre 11 de la deuxième machine 7 est relié soit à l'arbre 2 du moteur 3, soit à un troisième élément 26 d'un des trains de l'ensemble 9. Et l'arbre 10 de la première machine 6 est relié soit à l'arbre 4 des roues 5, soit à un quatrième élément 27 d'un des trains de l'ensemble 9. De préférence, le premier, le deuxième, le troisième, et le quatrième élément 24-27 sont quatre éléments distincts les uns des autres.

En outre, le dispositif 8 de liaison comporte un premier onduleur 12 associé à la première machine 6 et un deuxième onduleur 13 associé à la deuxième machine 7. Le dispositif 8 de liaison comporte aussi un bus 14 de tension continue qui relie les deux onduleurs 12 et 13. Ce bus 14 comporte une première connexion 14.1 et une deuxième connexion 14.2. Plus précisément, des phases 15 de la première machine 6 sont reliées à l'onduleur 12 qui est lui-même relié au bus 14 par l'intermédiaire de deux liaisons filaires 16 et 17. Des phases 18 de la deuxième machine 7 sont reliées au deuxième onduleur 13 qui est lui-même relié au bus 14 par l'intermédiaire de deux liaisons filaires 19 et 20.

Dans un tel dispositif 1 de transmission, une puissance fournie par l'arbre 2 du moteur 3 peut être transmise directement à l'arbre 4 de roues 5 par l'intermédiaire d'une chaîne mécanique formée par l'ensemble 9. Une partie de cette puissance peut aussi être dérivée par une chaîne électrique qui comporte les deux machines 6 et 7 et le dispositif 8 de liaison.

Lorsqu'une puissance est dérivée dans la chaîne électrique, les machines 6 et 7 se comportent soit en moteur, soit en générateur. Dans la configuration du dispositif 1 représentée, aucun système de stockage n'est relié au bus 14. Lorsqu'une des machines fonctionne en générateur, l'autre machine fonctionne donc en moteur.

Lorsqu'une des machines 6 ou 7 fonctionne en moteur, l'onduleur 12 ou 13 qui lui est associé transforme un signal de tension continue observable sur le bus 14 en signaux de tension alternatifs et déphasés. Les transistors de l'onduleur 12 ou 13 sont alors commandés en commutation de manière à hacher la tension continue observable sur le bus 14. Les signaux de tension alternatifs et déphasés sont appliqués aux bornes des bobines de la machine 6 ou 7 qui fonctionne en moteur.

Lorsqu'une des machines 6 ou 7 fonctionne en générateur, l'onduleur 12 ou 13 qui lui est associé transforme les signaux de tension alternative et déphasés observables aux bornes de bobines de la machine en signaux de tension continue émis sur le bus 14. A cette fin, les transistors de l'onduleurs 12 ou 13 sont bloqués et des diodes de roue libre reliées entre un émetteur et un collecteur d'un transistor forment un pont redresseur.

Dans la pratique, les machines 6 et 7 sont des machines de type synchrone. Ces machines présentent l'avantage d'être compactes et d'avoir un bon rendement.

Le dispositif 1 de transmission comporte un premier dispositif de commutation 21.1. Suivant le mode de fonctionnement du dispositif 1 de transmission, ce premier dispositif de commutation 21.1 relie l'arbre 11 de la deuxième machine 7 soit à l'arbre 4 de roues 5, soit au troisième élément 26. Plus précisément, le premier dispositif de commutation 21.1 est susceptible de relier l'arbre 11 de la deuxième machine 7 à l'arbre 4 des roues 5 par l'intermédiaire d'un premier engrenage 22. Le premier dispositif de commutation 21 est aussi susceptible de relier l'arbre 11 de la deuxième machine 7 au troisième élément 26 par l'intermédiaire d'un deuxième engrenage 23.

En outre, conformément à l'invention, le dispositif 1 de transmission comporte un deuxième dispositif de commutation 21.2. Suivant le mode de fonctionnement du dispositif 1, ce deuxième dispositif de commutation 21.2 permet de relier l'arbre 10 de la première machine 6 soit à l'arbre 2 du moteur 3, soit au quatrième élément 27. Plus précisément, ce deuxième dispositif de commutation 21.2 est susceptible de relier l'arbre 10 de la première machine 6 à l'arbre 2 du moteur 3 par l'intermédiaire d'un troisième engrenage 28. Ce deuxième dispositif de commutation 21.2 est aussi susceptible de relier l'arbre 10 de la première machine 6 au quatrième élément 27 par l'intermédiaire d'un quatrième engrenage 29.

Ainsi, dans un premier mode de fonctionnement, l'arbre 10 de la première machine 6 est relié au quatrième élément 27, tandis que l'arbre 11 de la deuxième machine 7 est relié à l'arbre 4 de roues 5. Ce premier mode de fonctionnement est utilisé pour des rapports de transmission courts, comme on le verra dans la figure 3.

Dans un deuxième mode de fonctionnement, l'arbre 10 de la première machine 6 est relié au quatrième élément 27, tandis que l'arbre 11 de la deuxième machine 7 est relié au troisième élément 26. Ce deuxième mode de fonctionnement est utilisé pour des rapports de vitesse moyens, comme on le verra dans la figure 3.

Dans un troisième mode de fonctionnement, l'arbre 10 de la première machine 6 est relié l'arbre 2 du moteur 3, tandis que l'arbre 11 de la deuxième machine 7 est relié au troisième élément 26. Ce troisième mode de fonctionnement est utilisé avec des rapport de transmission longs, comme on le verra dans la figure 3.

L'introduction du deuxième et du troisième mode de fonctionnement permet de limiter la puissance dérivée dans la chaîne électrique. A cet effet, les arbres 10 et 11 des machines 6 et 7 sont toujours reliés à l'élément qui tourne le moins vite, de manière à limiter la puissance transmise par ces machines. Ainsi, l'arbre 11 de la deuxième machine 7 est toujours relié à l'élément qui tourne le moins vite, entre l'arbre 4 de roues 5 et le troisième élément 26. Et l'arbre 10 de la première machine 6 est toujours relié à l'élément qui tourne le moins vite, entre l'arbre 4 de roues 5 et le quatrième élément 27.

Dans un état initial, le dispositif 1 de transmission fonctionne suivant son premier mode de fonctionnement. Pendant l'évolution de la vitesse du véhicule, le dispositif 1 de transmission passe d'un mode à un autre de manière continue. Ainsi, dans le dispositif de transmission selon l'invention, un seul des dispositifs 21.1 et 21.2 de commutation se déplace d'une position à une autre lors d'un changement de mode. Avec le dispositif 1 de transmission selon l'invention, on ne peut donc pas passer directement du premier au troisième mode de fonctionnement, ou inversement. Tous les autres changements de mode sont envisageables.

Dans la pratique, pour commuter sans difficulté du premier mode au deuxième mode de fonctionnement et réciproquement, on choisit des raisons des trains épicycloïdaux de l'ensemble 9 de manière spécifique. Plus précisément, ces raisons sont choisies de manière à ce que lorsque la vitesse de rotation de l'arbre 4 de roues 5 est égale à la vitesse de rotation du troisième élément 26 (à des rapports de démultiplication près), la vitesse de rotation de l'arbre 10 de la première machine 6 est nulle. La puissance transmise par une machine étant égale à son couple multiplié par sa vitesse de rotation, la puissance dans la chaîne électrique est nulle. Comme la deuxième machine 7 est en rotation et que sa puissance est nulle, le couple appliqué sur l'arbre 11 de cette deuxième machine 7 est nul. Le premier dispositif de commutation 21.1 peut ainsi passer sans effort d'un accrochage avec le premier engrenage 22 à un accrochage avec le troisième engrenage 23, et réciproquement. En outre, le couple appliqué sur l'arbre 4 de roues 5 est égal globalement à la somme du couple appliqué sur l'arbre 2 du moteur 3 et du couple appliqué sur l'arbre 11 de la deuxième machine 7. Le passage du premier mode au deuxième mode se fait donc sans aucune modification du couple appliqué sur l'arbre 4 de roues 5.

De manière analogue, pour commuter sans difficulté du deuxième au troisième mode et réciproquement, on choisit les raisons des trains épicycloïdaux de l'ensemble 9 de manière spécifique. Plus précisément, ces raisons sont choisies de manière à ce que lorsque la vitesse de rotation de l'arbre 2 du moteur 3 est égale à la vitesse de rotation du quatrième élément 27 (à des rapports de démultiplication près), la vitesse de rotation de l'arbre 11 de la deuxième machine 7 est nulle. La puissance dans la chaîne électrique est là encore nulle. Comme la vitesse de rotation de la première machine 6 n'est pas nulle, mais que sa puissance est nulle, le couple appliqué sur son arbre 10 est nul. Le deuxième dispositif de commutation 21.2 peut alors passer sans effort d'un accrochage avec le quatrième engrenage 29 à un accrochage avec le troisième engrenage 28, et réciproquement.

Le passage d'un mode à l'autre se fait de manière à ce que le moteur 3 fonctionne toujours à son point de fonctionnement optimal. Ce point de fonctionnement optimal correspond, pour une puissance donnée, au régime moteur où la puissance consommée est minimum.

A cet effet, le dispositif 1 de transmission comporte un dispositif de commande 30. Ce dispositif de commande comporte un microprocesseur 30.1, une mémoire programme 30.2, une mémoire de données 30.3 et une interface 30.4 d'entrées-sorties.

Des données D1-DN correspondent à des paramètres du dispositif 1 de transmission, tels que des valeurs de raisons de trains épicycloïdaux et des valeurs de rapports d'engrenages. Des signaux I1-IN sont appliqués sur des entrées de l'interface 30.4 d'entrées-sorties. Ces signaux I1-IN correspondent notamment à des signaux de mesure et à des signaux de consigne. Les signaux de mesure sont issus de capteurs (non représentés) situés sur les différents organes du dispositif 1. Ces capteurs émettent notamment des signaux électriques correspondant à des puissances dissipées par les différentes machines et à des vitesses de rotation de leur arbre. Les signaux de consigne correspondent par exemple à un degré d'enfoncement d'une pédale d'accélérateur, à des couples de référence à appliquer sur des arbres...

En fonction des signaux de mesure et de consigne reçus, le microprocesseur 30.1 exécute un programme P1 tenant en compte une cartographie du régime du moteur 3 et des rendements des machines 6 et 7. En fonction de valeurs retournées par ce programme P1, un mode de fonctionnement du dispositif 1 de transmission est sélectionné parmi les trois modes de fonctionnement du dispositif de transmission selon l'invention. Par exemple, si un minimum de consommation est détecté pour un rapport de transmission faible, le premier mode de fonctionnement sera sélectionné. Si un minimum de consommation est détecté pour un rapport de transmission élevé, ce sera plutôt le deuxième ou le troisième mode qui sera sélectionné.

Des signaux de commande O1 et O2 sont alors émis à destination des onduleurs 12 et 13. Ces signaux de commande O1 et O2 commandent la commutation des transistors de ces onduleurs 12 et 13. Cette commande des transistors permet d'adapter le couple et la vitesse de rotation des arbres des machines par rapport à un couple et une vitesse de rotation attendus. Un signal de commande OT est en outre appliqué sur une entrée d'un module de commande du moteur 3. Ce signal de commande OT commande l'injection d'essence dans le moteur. Les signaux de commande O1, O2 et OT commandent ainsi le dispositif 1 de transmission pour que le moteur fonctionne à son point de fonctionnement optimal et qu'un couple appliqué sur l'arbre 4 de roues 5 du véhicule corresponde au couple demandé par un utilisateur.

Pour commuter d'un mode à l'autre, des conditions de commutation sont vérifiées par le dispositif 30 de commande. Dans un exemple, un signal d'entrée I2 correspond à une vitesse de rotation de l'arbre 2 du moteur 3. Un signal d'entrée I4 correspond à une vitesse de rotation de l'arbre 4 de roues 5. Un signal d'entrée I10 correspond à une vitesse de rotation de l'arbre 10 de la première machine 6. Un signal d'entrée I11 correspond à la vitesse de rotation de l'arbre 11 de la deuxième machine 7. Un signal d'entrée I26 correspond à une vitesse de rotation du troisième élément I26 et un signal d'entrée I27 correspond à une vitesse de rotation du quatrième élément 27.

Lorsque les signaux d'entrée I4 et I26 indiquent que les vitesses de rotation de l'arbre 4 de roues 5 et du troisième élément 26 sont égales et que le signal d'entrée I2 indique que la vitesse de rotation de l'arbre 2 est nulle, le microprocesseur 30.1 exécute un programme P2. Ce programme P2 engendre l'émission d'un signal O3 qui commande un moteur électrique du deuxième dispositif de commutation 21.2. Ce moteur déplace le deuxième dispositif de commutation 21.2 d'une position à une autre afin de passer du premier au deuxième mode, ou réciproquement.

De même, lorsque les signaux d'entrée I2 et I27 indiquent que les vitesses de rotation de l'arbre 2 du moteur 3 et du quatrième élément 27 sont égales, et que le signal d'entrée I4 indique que la vitesse de rotation de l'arbre 4 est nulle, le microprocesseur 30.1 exécute un programme P3. Ce programme P3 engendre l'émission d'un signal 04 qui commande un moteur électrique associé au premier dispositif de commutation 21.1. Ce moteur déplace le premier dispositif de commutation 21.1 d'une position à une autre afin de passer du deuxième au troisième mode, ou réciproquement.

En variante, un quatrième mode de fonctionnement est envisageable. Dans ce quatrième mode, l'arbre 10 de la première machine 6 est relié à l'arbre du moteur 3 et l'arbre 11 de la deuxième machine 7 est reliée à l'arbre 4 de roues 5. Toutefois, ce quatrième mode présente peu d'intérêt. En effet, la machine 6 et la machine 7 sont respectivement en prise directe avec l'arbre 2 du moteur 3 et l'arbre 4 de roues 5. Or cette prise directe des machines 6 et 7 avec les arbres 2 et 3 ne limite pas la puissance dissipée par ces machines mais l'augmente au contraire, ce qui n'est pas intéressant d'un point de vue de la consommation du moteur 3.

En variante, un dispositif de stockage, tel qu'une batterie ou un super condensateur, est relié entre les connexions 14.1 et 14.2 du bus de tension continue.

En variante, le dispositif 8 de liaison électrique comporte un bus de tension triphasée et les onduleurs 12 et 13 sont remplacés par des commutateurs commandés par les signaux 01 et 02.

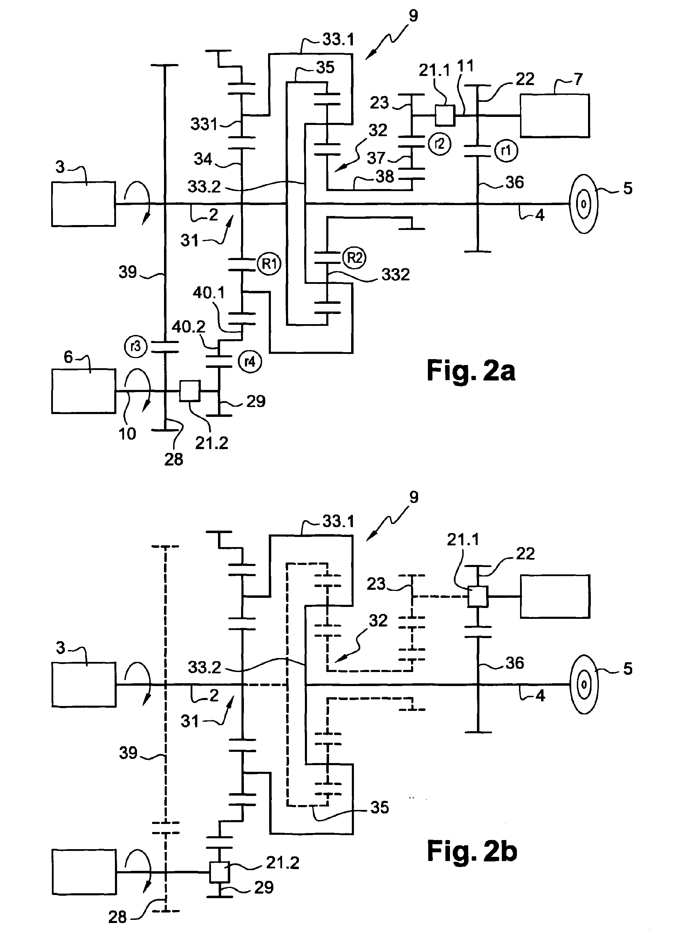

Les figures 2a-2d montrent une représentation schématique d'un exemple de réalisation d'un dispositif 1 de transmission selon l'invention. Ce dispositif 1 de transmission comporte deux trains épicycloïdaux 31 et 32. Les figures 2b-2d illustrent les trois modes de fonctionnement de ce dispositif 1 de transmission. Pour plus de clarté dans les figures, le dispositif 8 de liaison n'est pas représenté.

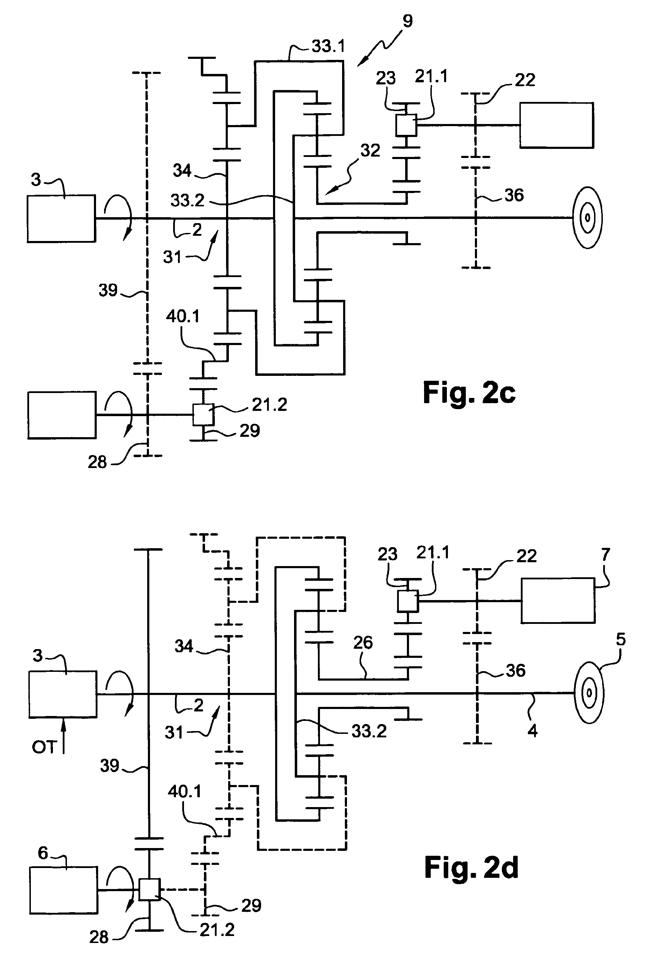

Plus précisément, la figure 2 montre l'ensemble 9 mécanique qui comporte un premier train 31 épicycloïdal et un deuxième train 32 épicycloïdal. Un porte-satellites 33.1 du premier train 31 est relié à un porte-satellites 33.2 du deuxième train 32. Les satellites du premier train 31 sont référencés 331. Les satellites du deuxième train 32 sont référencés 332. Un planétaire 34 du premier train 31 est relié à une couronne 35 du deuxième train 32.

L'arbre 2 du moteur 3 est relié au planétaire 34 du premier train 31. L'arbre 4 de roues 5 est relié au porte-satellites 33.2 du deuxième train 32.

L'arbre 11 de la deuxième machine 7 est relié soit à l'arbre 4 de roues 5, soit à un planétaire 38 du deuxième train 32. Plus précisément, l'arbre 11 de la deuxième machine 7 est susceptible d'être relié à l'arbre 4 de roues 5, à l'aide du premier dispositif de commutation 21.1, et par l'intermédiaire du premier engrenage 22 et d'une première roue 36. Un rapport r1 correspond au rapport entre le diamètre de ce premier engrenage 22 et de cette première roue 36. En outre, l'arbre 10 de la première machine 6 est susceptible d'être relié au planétaire 38 du deuxième train 32, à l'aide du premier dispositif de commutation 21.1, et par l'intermédiaire du deuxième engrenage 23 et d'une deuxième roue 37. Un rapport r2 correspond au rapport entre la vitesse de rotation du planétaire 38 et celle du deuxième engrenage 29.

L'arbre 10 de la première machine 6 est relié soit à l'arbre 2 du moteur 3, soit à une couronne 40.1 du premier train 31. Plus précisément, l'arbre 10 de la première machine 6 est susceptible d'être relié à l'arbre 2 du moteur 3, à l'aide du deuxième dispositif de commutation 21.2, et par l'intermédiaire du troisième engrenage 28 et d'une troisième roue 39. Un rapport r3 correspond au rapport entre le diamètre de ce troisième engrenage 28 et de cette troisième roue 39. En outre, l'arbre 10 de la première machine 6 est susceptible d'être relié à la couronne 40.1 du premier train 31, à l'aide du deuxième dispositif de commutation 21.2, et par l'intermédiaire du quatrième engrenage 29 et d'une quatrième roue 40.2. Un rapport r4 correspond au rapport entre le diamètre de ce quatrième engrenage 29 et de cette quatrième roue 37.

Dans cette réalisation, le premier élément 24 de la figure 1 correspond au planétaire 34 du premier train 31. Le deuxième élément 25 de la figure 1 correspond au porte-satellites 33.2 du deuxième train 32. Le troisième élément 26 de la figure 1 correspond au planétaire 38 du deuxième train 32. Le quatrième élément 27 correspond à la couronne 40.1 du premier train 31.

La raison d'un train épicycloïdal correspond au rapport entre le diamètre de sa couronne et le diamètre de son planétaire.

La figure 2b illustre le premier mode de fonctionnement du dispositif 1 de transmission de la figure 2a.

Dans ce premier mode, le premier dispositif de commutation 21.1 est relié au premier engrenage 22 et le deuxième dispositif de commutation est relié au quatrième engrenage 29. Ainsi, le premier engrenage 22 est entraîné en rotation par le premier dispositif de commutation 21.1, tandis que le deuxième engrenage 23 n'est pas entraîné en rotation. En outre, le quatrième engrenage 29 est entraîné en rotation par le deuxième dispositif de commutation 21.2, tandis que le troisième engrenage 28 n'est pas entraîné en rotation.

Aucune puissance ne peut donc être transmise par l'intermédiaire du deuxième engrenage 23 et du troisième engrenage 28. Le troisième engrenage 28 et la troisième roue 39 sont donc représentés en pointillés pour illustrer le fait qu'ils ne transmettent aucune puissance à l'arbre 4 de roues 5. Le deuxième train 32 épicycloïdal est aussi représenté en pointillés. En effet, même si la couronne 35 du deuxième train 32 est entraînée en rotation, elle ne transmet aucune puissance à l'arbre 4 de roue 5, puisqu'elle n'est pas reliée à cet arbre 4.

Dans ce premier mode, la deuxième machine 7 transmet sa puissance à l'arbre 4 de roues 5 par l'intermédiaire du premier engrenage 22 et de la première roue 36. En outre, le moteur thermique fournit sa puissance à l'arbre 4 de roue 5 par l'intermédiaire du premier train 31. Dans ce premier mode, la vitesse de rotation de l'arbre 4 de roues 5 est égale à la vitesse de rotation des portes-satellites 33.1 et 33.2.

Lorsque le véhicule est dans une phase de traction, c'est à dire lorsque l'arbre 2 du moteur 3 fournit de la puissance à l'arbre 4 de roues 5, la première machine 6 se comporte en générateur, tandis que la deuxième machine 7 se comporte en moteur. Lorsque le véhicule est dans une phase de récupération, c'est à dire lorsque l'arbre 2 du moteur 3 est entraîné en rotation par l'arbre de roues 5, la première machine 6 se comporte en moteur, tandis que la deuxième machine se comporte en générateur. Le comportement des machines dans les différentes phases est valable dans tous les modes de fonctionnement du dispositif 1 de transmission selon l'invention.

La figure 2c illustre le deuxième mode de fonctionnement du dispositif 1 de transmission selon l'invention.

L'arbre 2 du moteur 3 thermique est toujours relié au planétaire 34 du premier train 31. L'arbre 4 de roues 5 est toujours relié au porte-satellites 33.2 du deuxième train 32.

Dans ce deuxième mode de fonctionnement, le premier dispositif de commutation 21.1 est relié au deuxième engrenage 23 et le deuxième dispositif de commutation 21.2 est relié au quatrième engrenage 29. Ainsi, le deuxième engrenage 23 est entraîné en rotation par le premier dispositif de commutation 21.1, tandis que le deuxième engrenage 23 n'est pas entraîné en rotation. En outre, le quatrième engrenage 29 est entraîné en rotation par le premier dispositif de commutation 21.1, tandis que le troisième engrenage 28 n'est pas entraîné en rotation.

En conséquence, le premier engrenage 22 et la première roue 36 sont représentés en pointillés, ainsi que le quatrième engrenage 29 et la quatrième roue 39. Cette représentation en pointillés illustre le fait qu'ils ne transmettent pas de puissance à l'arbre 4 de roues 5.

Dans ce deuxième mode, les échanges de puissance entre les arbres des machines 6 et 7, l'arbre 2 du moteur 3 et l'arbre 4 de roues 5 se font par l'intermédiaire des deux trains 31 et 32.

La figure 2d illustre le troisième mode de fonctionnement du dispositif 1 de transmission selon l'invention.

L'arbre 2 du moteur 3 thermique est toujours relié au planétaire 34 du premier train 31. L'arbre 4 de roues 5 est toujours relié au porte-satellites 33.2 du deuxième train 32.

Dans ce troisième mode de transmission, le premier dispositif de commutation 21.1 est relié au deuxième engrenage 23, et le deuxième dispositif de commutation 21.2 est relié au troisième engrenage 28. Le deuxième engrenage 23 est donc entraîné en rotation par le premier dispositif de commutation 21.1, tandis que le premier engrenage 22 n'est pas entraîné en rotation. En outre, le troisième engrenage 28 est entraîné en rotation par le deuxième dispositif de commutation 21.1, tandis que le quatrième engrenage 29 n'est pas entraîne en rotation.

En conséquence, le premier engrenage 22 et la première roue 36 représentés en pointillés ne peuvent pas transmettre de puissance à l'arbre 4 de roues 5. Le premier train 31 est aussi représenté en pointillés pour illustrer le fait qu'il ne transmet pas non plus de puissance à l'arbre 4 des roues 5. En effet, la couronne 40.1 de ce premier train 31 est entraînée en rotation, mais elle n'est pas reliée à l'arbre de la deuxième machine 7.

Dans ce troisième mode, les échanges de puissance entre les arbres des machines 6 et 7, l'arbre 2 du moteur 3 et l'arbre 4 de roues 5 sont réalisés par l'intermédiaire du troisième engrenage 28 et de la troisième roue 39, ainsi que par l'intermédiaire du deuxième train 32.

La figure 3 montre des courbes 43 représentant une vitesse de rotation de l'arbre 2 du moteur 3 en tours par minute, en fonction d'une vitesse du véhicule en kilomètres par heure.

Ces courbes 43 se situent dans trois zones différentes. Chaque zone est limitée par deux droites, appelées droites d'adaptation. Ces droites d'adaptation correspondent à des démultiplications pour lesquelles la puissance dérivée dans la chaîne électrique est nulle. Chaque zone correspond à un mode de fonctionnement du dispositif 1 de transmission selon l'invention. En effet, deux droites d'adaptation sont associées à chaque mode.

Ainsi, une première droite d'adaptation 44 et une deuxième droite d'adaptation 45 sont associées au premier mode de fonctionnement du dispositif 1 de transmission. Ce premier mode de fonctionnement est utilisé pour des rapports de transmission faibles. Ce premier mode est mis en oeuvre notamment lors d'un démarrage du véhicule ou lorsque le véhicule possède une vitesse comprise entre 0 et 15 km/h, pour une vitesse de rotation de l'arbre du moteur thermique de 1000 tours/min. Ce premier mode est aussi mis en oeuvre pour des marches arrière du véhicule.

La deuxième droite 45 d'adaptation et une troisième droite 46 d'adaptation sont associées au deuxième mode de fonctionnement. Ce deuxième mode est mis en oeuvre pour des rapports de transmission moyens.

La troisième droite d'adaptation 46 et une quatrième droite d'adaptation 47 sont associées au troisième mode de fonctionnement. Ce troisième mode est mis en oeuvre pour des rapports de transmission plus long que ceux mis en oeuvre dans le deuxième mode.

Le deuxième et le troisième mode sont mis en oeuvre après le démarrage du véhicule, lorsque ce dernier fonctionne en marche avant.

A chaque courbe 43 correspond une puissance dérivée dans la chaîne électrique. Plus on s'éloigne des droites d'adaptation, plus la puissance dérivée augmente. Au contraire, plus on se rapproche des droites d'adaptation, plus la puissance dérivée dans la chaîne électrique diminue. Dans une réalisation particulière, une des courbes 43 proches des droites d'adaptation d'une zone correspond à une puissance dérivée de 10KW, tandis qu'une autre courbe plus éloignée des droites d'adaptation correspond à une puissance dérivée dans la chaîne électrique de 18KW.

Pour chaque droite, une vitesse de rotation d'un arbre d'une des machines 6 ou 7 est nulle. Plus précisément, sur la deuxième droite 45 d'adaptation, la vitesse de rotation WA de l'arbre 10 de la première machine 6 est nulle. Sur la troisième droite d'adaptation 46, la vitesse de rotation WB de l'arbre 11 de la deuxième machine 7 est nulle. Ainsi, lorsqu'on se situe sur une droite d'adaptation, la puissance dérivée dans la chaîne électrique est nulle. Lorsqu'on se situe sur une droite d'adaptation, la puissance du moteur 2 est donc transmise directement par la voie mécanique à l'arbre 4 de roues 5. Chaque droite d'adaptation correspond donc à un rapport de démultiplication entre la vitesse de rotation de l'arbre 2 du moteur 3 et une vitesse de rotation de l'arbre 4 de roues 5.

Le passage d'un mode à un autre permet d'alléger une contrainte exercée sur les arbres 10 et 11 des machines 6 et 7 aux alentours de leur vitesse maximale. A cet effet, dans le premier mode, la deuxième machine 7 est en prise directe avec l'arbre 4 de roues 5. La vitesse de rotation WB de l'arbre 11 de cette deuxième machine 7 augmente donc très rapidement proportionnellement à la vitesse de cet arbre 4 de roue 5. Sur la deuxième droite d'adaptation 45, si le moteur 3 est lui-même à sa vitesse maximale, la vitesse de rotation WB de l'arbre 11 de la deuxième machine 7 atteint sa vitesse maximale. Dans tous les cas, sur la deuxième droite d'adaptation 45, la vitesse de rotation WA de l'arbre 10 de la première machine 6 est nulle. Si la vitesse du véhicule augmente, on passe alors dans le deuxième mode de fonctionnement.

Dans ce deuxième mode, lorsque la vitesse du véhicule augmente, la vitesse de rotation WB de l'arbre 11 de la deuxième machine 7 diminue, tandis que la vitesse de rotation WA de l'arbre 10 de la première machine 6 augmente. Sur la troisième droite d'adaptation 46, la vitesse de rotation WB de l'arbre 11 de la deuxième machine 7 est nulle, tandis que la vitesse de rotation WA de l'arbre 10 première machine 6 peut être proche de sa vitesse maximale. Si la vitesse du véhicule augmente encore, le dispositif 1 de transmission passe dans le troisième mode de fonctionnement.

Dans ce troisième mode, la vitesse de rotation WA de l'arbre 10 de la première machine 6 et la vitesse de rotation WB de l'arbre 11 de la deuxième machine 7 sont inférieures à leur vitesse maximale.

Le dispositif 1 de transmission selon l'invention permet de limiter la puissance transmise par la chaîne électrique à 12 kilowatts. Alors que pour les dispositifs existant ne possédant qu'un mode de fonctionnement, les machines transmettent environ quatre fois plus de puissance, et que, pour les dispositifs existants ne possédant que deux modes de fonctionnement les machines transmettent une puissance de l'ordre de 18 kilowatts. Les machines utilisées dans le dispositif selon l'invention sont donc plus compactes que les machines des dispositifs de l'état de la technique.

De préférence, comme on l'a vu, le dispositif de commande 30 pilote les changements de mode sur les droites d'adaptation, lorsque la puissance dérivée dans la chaîne électrique est nulle. Ce changement de mode sur les droites d'adaptation permet de déplacer le dispositif de commutation 21.1 ou 21.2 d'une position à une autre sans effort. En effet, le couple qui est appliqué sur l'arbre le long duquel se déplace le dispositif de commutation 21.1 ou 21.2 est alors nul.

En variante, le dispositif de commande 30 pilote des changements de mode sur des droites différentes des droites d'adaptation, telles que la droite 48 ou la droite 49. Ces droites 48 et 49 sont représentées en pointillés. Le dispositif de commande 30 émet alors des signaux O1 et O2 de commande à destination des onduleurs 12 et 13 associés aux machines 6 et 7, de manière à compenser une différence de vitesse de rotation qui existe entre l'arbre de la machine 6 ou 7 et un élément à relier. Dans cette variante, pour augmenter la vitesse de l'arbre de la machine, de l'énergie supplémentaire est fournie à la machine 6 ou 7 par l'intermédiaire d'un système de stockage. Ce système de stockage, tel qu'une batterie ou un super condensateur est relié sur un bus électrique qui relie les deux machines.

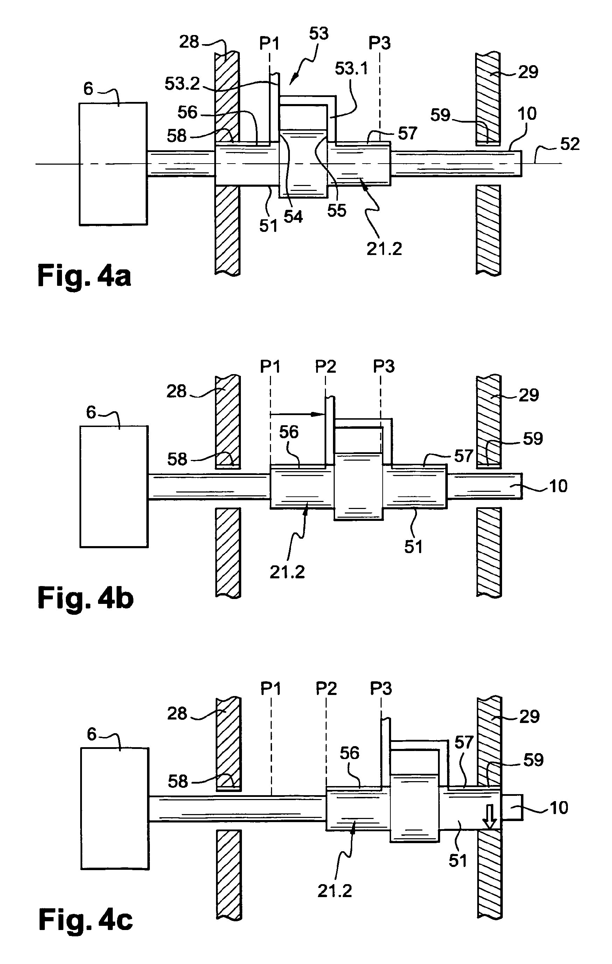

Les figures 4a-4c montrent des étapes d'un déplacement du deuxième dispositif de commutation 21.1. Ce deuxième dispositif de commutation 21.2 permet à l'arbre de la première machine 6 de s'accrocher soit au troisième engrenage 28, soit au quatrième engrenage 29.

Le dispositif de commutation 21.1 comporte un crabot 51 et une fourchette 53. Le crabot 51 se déplace le long de l'arbre 10 de la première machine 6 qui possède un axe 52 de rotation. La fourchette 53 est accrochée au crabot 51. Plus précisément, cette fourchette 53 comporte deux bras 53.1 et 53.2 qui sont en appui sur des épaulements 54 et 55 du crabot 51. Cette fourchette 53 est déplacée à l'aide d'un moteur à courant continu. Une mise en rotation de ce moteur est commandée par le signal O3 émis par le dispositif 30 de commande.

Sur la figure 4a, le crabot 51 se situe dans une première position P1. Dans cette première position P1, le crabot 51 est en prise avec le troisième engrenage 28. Le quatrième engrenage 29 n'est pas entraînée en rotation.

Sur la figure 4b, la fourchette 53 déplace le crabot 51 de la première position vers une deuxième position P2. Lors de ce déplacement, le crabot 51 se dégage du premier engrenage 28. Dans cette position, le crabot 51 n'est en prise ni avec le troisième engrenage 28, ni avec le quatrième engrenage 29.

Sur la figure 4c, la fourchette 53 déplace le crabot 51 de la deuxième position P2 vers une troisième position P3. Lors de ce déplacement, le crabot 51 s'engage dans le quatrième engrenage 29. Dans cette troisième position P3, le crabot 51 est en prise avec quatrième engrenage 29 de manière à pouvoir l'entraîner en rotation. Le troisième engrenage 28 n'est pas entraîné en rotation.

Dans une réalisation particulière, le crabot 51 comporte des languettes 56 et 57 orientées axialement par rapport à l'axe 52. Les engrenages 28 et 29 comportent respectivement un rainure 58 et une rainure 59 sur leurs périphéries. Ces rainures 58 et 59 sont orientées axialement par rapport à l'axe 52. Ces rainures 58 et 59 sont destinées à accueillir les languettes 56 et 57, de manière à ce que le crabot 51 puisse entraîner en rotation les engrenages 28 et 29.

En variante, le crabot 51 comporte des dents qui entrent en coopération avec des dents des engrenages 28 et 29 se situant sur la périphérie de leur diamètre intérieur.

Bien entendu, le déplacement du crabot 51 est réversible. En effet, le crabot 51 peut aussi passer d'un accrochage avec le quatrième engrenage 29 à un accrochage avec le troisième engrenage 28.

Pour que le passage d'une position à une autre se déroule sans effort, lorsque les vitesses de rotation des engrenages 28 et 29 sont égales, la vitesse de rotation de l'arbre 11 de la deuxième machine 7 est nulle. Bien entendue, en raison de son inertie, la vitesse de rotation de l'arbre 10 de la première machine 6 est aussi égale aux vitesse de rotation des engrenages 28 et 29 pendant une commutation. Ces conditions permettent d'annuler le couple observable sur l'arbre 10 de la première machine 6, bien qu'il soit en rotation.

Toutefois, dans la pratique, une puissance correspondant à des pertes des machines électriques 6 et 7 doit être dissipée, même lors d'une commutation. Lors de la commutation du deuxième au troisième mode, la première machine 6 est alors commandée, de manière à ce qu'un léger couple soit observable sur son arbre 10. La combinaison de la vitesse de rotation de son arbre 10 et du couple observable sur cet arbre engendre une puissance qui correspond aux pertes des machines électriques 6 et 7. Il en est de même avec l'arbre 11 de la deuxième machine 7 lors d'une commutation du premier au deuxième mode et réciproquement.

Le crabot 51 présente l'intérêt de dissiper très peu d'énergie. En variante, le dispositif de commutation utilisé est un embrayage.

Le premier dispositif de commutation 21.1 est réalisé de la même manière que le dispositif de commutation 21.2 qui vient d'être décrit.

## Revendications

1. Dispositif (1) de transmission de puissance entre un arbre (2) d'un moteur (3) thermique et un arbre (4) de roues (5), comportant
- une première et une deuxième machine électrique (6, 7), et
- un ensemble (9) mécanique reliant entre eux l'arbre (4) de roues (5), l'arbre (2) du moteur (3) et des arbres (10, 11) des deux machines (6, 7) électriques, cet ensemble (9) mécanique étant formé d'un premier et d'un deuxième train (31, 32) épicycloïdal, ce premier et ce deuxième train (31, 32) épicycloïdal étant reliés entre eux par leur porte-satellites (33.1, 33.2), un planétaire (34) du premier train (31) étant relié à une couronne (35) du deuxième train (32), l'arbre (2) du moteur (3) étant relié au planétaire (34) du premier train (31) et l'arbre (4) de roues (5) étant relié au porte-satellites (33.2) du deuxième train (32),
- un premier dispositif de commutation (21.1) comportant des moyens (51, 53) pour relier l'arbre (11) de la deuxième machine (7) soit à l'arbre (4) de roues (5), soit au planétaire (38) du deuxième train (32),
- un deuxième dispositif de commutation (21.2) comportant des moyens (51, 53) pour lier en rotation l'arbre (10) de la première machine (6) soit à l'arbre (2) du moteur (3), soit à la couronne (40.1) du premier train (31) épicycloïdal"
lesdits dispositifs de commutation (21.1, 21.2) étant commandés pour :
- soit relier l'arbre (10) de la première machine (6) à la couronne (40.1) du premier train (31) et l'arbre (11) de la deuxième machine (7) à l'arbre (4) de roues (5),
- soit relier l'arbre (10) de la première machine (6) à la couronne (40.1) du premier train (31) épicycloïdal et l'arbre (11) de la deuxième machine (7) au planétaire (38) du deuxième train (32),
- soit relier l'arbre (10) de la première machine (6) à l'arbre (2) du moteur (3) et l'arbre (11) de la deuxième machine (7) au planétaire (38) du deuxième train (32),

2. Dispositif selon la revendication 1, **caractérisé en ce que** :
- les raisons (R1, R2) des trains (31, 32) épicycloïdaux sont choisies, de manière à ce que lorsque la vitesse de rotation de la couronne (40.1) du premier train (31) est égale à la vitesse de rotation de l'arbre (2) du moteur (3), la vitesse de rotation de l'arbre (11) de la deuxième machine (7) est nulle.

3. Dispositif selon l'une des revendications 1 et 2, **caractérisé en ce que :**
- le dispositif de commutation (21.2) comporte un crabot (51) et une fourchette (53).

4. Dispositif selon l'une des revendications 1 à 3, **caractérisé en ce qu'**il comporte un dispositif (8) de liaison électrique qui relie les machines électriques entre elles.

5. Dispositif selon la revendication 4, **caractérisé en ce que :**
- le dispositif (8) de liaison électrique comporte un bus (14) de tension continue et deux onduleurs reliés chacun à une des machines électriques et à ce bus (14).

6. Dispositif selon la revendication 5, **caractérisé en ce qu'**il comporte une batterie reliée au bus (14) électrique de tension.

7. Procédé de transmission de puissance entre un arbre (2) de moteur (3) et un arbre (4) de roues (5) pour la mise en oeuvre du dispositif selon l'une des revendications 1 à 6, dans lequel :
- on relie l'arbre (10) de la première machine (6) à la couronne (40.1) du premier train (31) et l'arbre (11) de la deuxième machine (7) à l'arbre (4) de roues (5), dans un premier mode de fonctionnement,
- on relie l'arbre (10) de la première machine (6) à la couronne (40.1) du premier train (31) et l'arbre (11) de la deuxième machine (7) au planétaire (38) du deuxième train (32), dans un deuxième mode de fonctionnement, et
- dans un troisième mode de fonctionnement, on relie l'arbre (10) de la première machine (6) à l'arbre (2) du moteur (3) et on relie l'arbre (11) de la deuxième machine (7) au planétaire (38) du deuxième train (32)..

8. Procédé selon la revendication 7, **caractérisé en ce que :**
- on passe du premier mode au deuxième mode de fonctionnement, lorsque la vitesse de rotation de l'arbre (4) de roues (5) est égale à la vitesse de rotation du planétaire (38) du deuxième train (32).

9. Procédé selon la revendication 8, **caractérisé en ce que :**
- la vitesse de rotation de l'arbre (10) de la première machine (6) est nulle.

10. Procédé selon l'une des revendications 7 à 9, **caractérisé en ce que** :
- on passe du deuxième mode au troisième mode de fonctionnement lorsque la vitesse de rotation de l'arbre (2) du moteur (3) est égale à la vitesse de rotation de la couronne (40.1) du premier train (31).

11. Procédé selon la revendication 10, **caractérisé en ce que :**
- la vitesse de rotation de l'arbre (11) de la deuxième machine (7) est nulle.

12. Procédé selon l'une des revendications 7 à 11, **caractérisé en ce que** :
- on pilote les deux machines (6, 7) électriques pour compenser une différence de vitesse entre un arbre d'une des machines et l'élément à relier lors d'un passage d'un mode à l'autre, à l'aide d'un dispositif de commande (30).

## Claims

1. Device (1) for transmitting power between a shaft (2) of a combustion engine (3) and a shaft (4) of wheels (5), comprising
- a first and a second electrical machine (6, 7), and
- a mechanical assembly (9) connecting together the shaft (4) of wheels (5), the shaft (2) of the engine (3) and shafts (10, 11) of the two electrical machines (6, 7), this mechanical assembly (9) being formed of a first and of a second epicyclic gearset (31, 32), this first and this second epicyclic gearset (31, 32) being connected to one another by their planet carrier (33.1, 33.2), a sun gear (34) of the first gearset (31) being connected to an annulus gear (35) of the second gearset (32), the shaft (2) of the engine (3) being connected to the sun gear (34) of the first gearset (31) and the shaft (4) of wheels (5) being connected to the planet carrier (33.2) of the second gearset (32),
- a first switching device (21.1) comprising means (51, 53) for connecting the shaft (11) of the second machine (7) either to the shaft (4) of wheels (5) or to the sun gear (38) of the second gearset (32),
- a second switching device (21.2) comprising means (51, 53) for rotationally connecting the shaft (10) of the first machine (6) either to the shaft (2) of the engine (3) or to the annulus gear (40.1) of the first epicyclic gearset (31),
the said switching devices (21.1, 21.2) being controlled in such a way as to:
- either connect the shaft (10) of the first machine (6) to the annulus gear (40.1) of the first gearset (31) and the shaft (11) of the second machine (7) to the shaft (4) of wheels (5),
- or connect the shaft (10) of the first machine (6) to the annulus gear (40.1) of the first epicyclic gearset (31) and the shaft (11) of the second machine (7) to the sun gear (38) of the second gearset (32),
- or connect the shaft (10) of the first machine (6) to the shaft (2) of the engine (3) and the shaft (11) of the second machine (7) to the sun gear (38) of the second gearset (32).

2. Device according to Claim 1, **characterized in that**:
- the ratios (R1, R2) of the epicyclic gearsets (31, 32) are chosen so that when the rotational speed of the annulus gear (40.1) of the first gearset (31) is equal to the rotational speed of the shaft (20) of the engine (3), the rotational speed of the shaft (11) of the second machine (7) is zero.

3. Device according to one of Claims 1 and 2, **characterized in that**:
- the switching device (21.2) comprises a dog clutch (51) and a fork (53).

4. Device according to one of Claims 1 to 3, **characterized in that** it comprises an electrical connection device (8) which connects the electrical machines together.

5. Device according to Claim 4, **characterized in that**:
- the electrical-connection device (8) comprises a DC voltage bus (14) and two inverters each connected to one of the electrical machines and to this bus (14).

6. Device according to Claim 5, **characterized in that** it comprises a battery connected to the electric voltage bus (14).

7. Method of transmitting power between a shaft (2) of an engine (3) and a shaft (4) of wheels (5) for implementing the device according to one of Claims 1 to 6, in which:
- the shaft (10) of the first machine (6) is connected to the annulus gear (40.1) of the first gearset (31) and the shaft (11) of the second machine (7) is connected to the shaft (4) of wheels (5) in a first mode of operation,
- the shaft (10) of the first machine (6) is connected to the annulus gear (40.1) of the first gearset (31) and the shaft (11) of the second machine (7) is connected to the sun gear (38) of the second gearset (32) in a second mode of operation, and
- in a third mode of operation, the shaft (10) of the first machine (6) is connected to the shaft (2) of the engine (3) and the shaft (11) of the second machine (7) is connected to the sun gear (38) of the second gearset (32).

8. Method according to Claim 7, **characterized in that**:
- there is a switch from the first mode of operation to the second when the rotational speed of the shaft (4) of wheels (5) is equal to the rotational speed of the sun gear (38) of the second gear set (32).

9. Method according to Claim 8, **characterized in that**:
- the rotational speed of the shaft (10) of the first machine (6) is zero.

10. Method according to one of Claims 7 to 9, **characterized in that**:
- there is a switch from the second mode of operation to the third when the rotational speed of the shaft (2) of the engine (3) is equal to the rotational speed of the annulus gear (40.1) of the first gearset (31).

11. Method according to Claim 10, **characterized in that**:
- the rotational speed of the shaft (11) of the second machine (7) is zero.

12. Method according to one of Claims 7 to 11, **characterized in that**:
- the two electrical machines (6, 7) are controlled in such a way as to compensate for a difference in speed between a shaft of one of the machines and the element that is to be connected during the switch from one mode to the other, using a control device (30).

## Patentansprüche

1. Vorrichtung (1) zur Leistungsübertragung zwischen einer Welle (2) eines Verbrennungsmotors (3) und einer Welle (4) von Rädern (5), die aufweist
- eine erste und eine zweite elektrische Maschine (6, 7), und
- eine mechanische Einheit (9), die die Welle (4) von Rädern (5), die Welle (2) des Motors (3) und Wellen (10, 11) der zwei elektrischen Maschinen (6, 7) miteinander verbindet, wobei diese mechanische Einheit (9) von einem ersten und von einem zweiten Planetengetriebe (31, 32) geformt wird, wobei dieses erste und dieses zweite Planetengetriebe (31, 32) miteinander über ihren Planetensteg (33.1, 33.2) verbunden sind, wobei ein Sonnenrad (34) des ersten Getriebes (31) mit einem Hohlrad (35) des zweiten Getriebes (32) verbunden ist, wobei die Welle (2) des Motors (3) mit dem Sonnenrad (34) des ersten Getriebes (31) und die Welle (4) von Rädern (5) mit dem Planetensteg (33.2) des zweiten Getriebes (32) verbunden ist,
- eine erste Schaltvorrichtung (21.1), die Einrichtungen (51, 53) aufweist, um die Welle (11) der zweiten Maschine (7) entweder mit der Welle (4) von Rädern (5) oder mit dem Sonnenrad (38) des zweiten Getriebes (32) zu verbinden,
- eine zweite Schaltvorrichtung (21.2), die Einrichtungen (51, 53) aufweist, um die Welle (10) der ersten Maschine (6) entweder mit der Welle (2) des Motors (3) oder mit dem Hohlrad (40.1) des ersten Planetengetriebes (31) in Drehung zu verbinden,
wobei die Schaltvorrichtungen (21.1, 21.2) gesteuert werden, um:
- entweder die Welle (10) der ersten Maschine (6) mit dem Hohlrad (40.1) des ersten Getriebes (31) und die Welle (11) der zweiten Maschine (7) mit der Welle (4) von Rädern (5) zu verbinden,
- oder die Welle (10) der ersten Maschine (6) mit dem Hohlrad (40.1) des ersten Planetengetriebes (31) und die Welle (11) der zweiten Maschine (7) mit dem Sonnenrad (38) des zweiten Getriebes (32) zu verbinden,
- oder die Welle (10) der ersten Maschine (6) mit der Welle (2) des Motors (3) und die Welle (11) der zweiten Maschine (7) mit dem Sonnenrad (38) des zweiten Getriebes (32) zu verbinden.

2. Vorrichtung nach Anspruch 1, **dadurch gekennzeichnet, dass:**
- die Verhältnisse (R1, R2) der Planetengetriebe (31, 32) so gewählt werden, dass, wenn die Drehgeschwindigkeit des Hohlrads (40.1) des ersten Getriebes (31) gleich der Drehgeschwindigkeit der Welle (2) des Motors (3) ist, die Drehgeschwindigkeit der Welle (11) der zweiten Maschine (7) Null ist.

3. Vorrichtung nach einem der Ansprüche 1 und 2, **dadurch gekennzeichnet, dass:**
- die Schaltvorrichtung (21.2) eine Klaue (51) und eine Gabel (53) aufweist.

4. Vorrichtung nach einem der Ansprüche 1 bis 3, **dadurch gekennzeichnet, dass** sie eine Vorrichtung (8) zur elektrischen Verbindung aufweist, die die elektrischen Maschinen miteinander verbindet.

5. Vorrichtung nach Anspruch 4, **dadurch gekennzeichnet, dass:**
- die Vorrichtung (8) zur elektrischen Verbindung einen Gleichspannungsbus (14) und zwei Wechselrichter aufweist, die je mit einer der elektrischen Maschinen und mit diesem Bus (14) verbunden sind.

6. Vorrichtung nach Anspruch 5, **dadurch gekennzeichnet, dass** sie eine Batterie aufweist, die mit dem elektrischen Spannungsbus (14) verbunden ist.

7. Verfahren zur Leistungsübertragung zwischen einer Welle (2) eines Motors (3) und einer Welle (4) von Rädern (5) zur Verwendung der Vorrichtung nach einem der Ansprüche 1 bis 6, bei dem:
- in einer ersten Betriebsart die Welle (10) der ersten Maschine (6) mit dem Hohlrad (40.1) des ersten Getriebes (31) und die Welle (11) der zweiten Maschine (7) mit der Welle (4) von Rädern (5) verbunden wird,
- in einer zweiten Betriebsart die Welle (10) der ersten Maschine (6) mit dem Hohlrad (40.1) des ersten Getriebes (31) und die Welle (11) der zweiten Maschine (7) mit dem Sonnenrad (38) des zweiten Getriebes (32) verbunden wird, und
- in einer dritten Betriebsart die Welle (10) der ersten Maschine (6) mit der Welle (2) des Motors (3) verbunden und die Welle (11) der zweiten Maschine (7) mit dem Sonnenrad (38) des zweiten Getriebes (32) verbunden wird.

8. Verfahren nach Anspruch 7, **dadurch gekennzeichnet, dass:**
- von der ersten zur zweiten Betriebsart übergegangen wird, wenn die Drehgeschwindigkeit der Welle (4) von Rädern (5) gleich der Drehgeschwindigkeit des Sonnenrads (38) des zweiten Getriebes (32) ist.

9. Verfahren nach Anspruch 8, **dadurch gekennzeichnet, dass:**
- die Drehgeschwindigkeit der Welle (10) der ersten Maschine (6) Null ist.

10. Verfahren nach einem der Ansprüche 7 bis 9, **dadurch gekennzeichnet, dass:**
- von der zweiten zur dritten Betriebsart übergegangen wird, wenn die Drehgeschwindigkeit der Welle (2) des Motors (3) gleich der Drehgeschwindigkeit des Hohlrads (40.1) des ersten Getriebes (31) ist.

11. Verfahren nach Anspruch 10, **dadurch gekennzeichnet, dass:**
- die Drehgeschwindigkeit der Welle (11) der zweiten Maschine (7) Null ist.

12. Verfahren nach einem der Ansprüche 7 bis 11, **dadurch gekennzeichnet, dass:**
- die zwei elektrischen Maschinen (6, 7) mit Hilfe einer Steuervorrichtung (30) gesteuert werden, um eine Geschwindigkeitsdifferenz zwischen einer Welle einer der Maschinen und dem zu verbindenden Element bei einem Übergang von einer Betriebsart zur anderen zu kompensieren.
